Europäisches Patentamt

European Patent Office

Office européen des brevets

(19)

(11) Publication number: **0 113 179**
**A1**

(12) **EUROPEAN PATENT APPLICATION**

(21) Application number: **83307088.1**

(22) Date of filing: **21.11.83**

(51) Int. Cl.³: **B 60 T 15/04**

(30) Priority: **22.11.82 GB 8233291**

(43) Date of publication of application:
**11.07.84 Bulletin 84/28**

(84) Designated Contracting States:
**BE DE FR GB IT NL SE**

(71) Applicant: **BENDIX LIMITED**
**Douglas Road**
**Kingswood, Bristol BS15 2NL(GB)**

(72) Inventor: **Fogg, Stephen Walter**
**37 Millmead Road**
**Bath BA2 3JP(GB)**

(72) Inventor: **Swinton-Clark, William James Bentinck**
**Lower Mill Lodge Newnham Lane**
**Old Basing Basingstoke Hants RG24 04T(GB)**

(74) Representative: **Turner, Alan Reginald**
**c/o Bendix Limited Douglas Road**
**Kingswood, Bristol BS15 2NL(GB)**

(54) **Fluid pressure valve assembly.**

(57) A fluid pressure dual foot valve assembly for an air pressure braking system has a self-lapping valve arrangement (10, 11, 12, 13, 14, 15) the pressure responsive member (10) of which is movable by a force appying member 7 via resilient springs (20, 21) and arranged between the force applying member on the one hand and the housing and/or the pressure responsive member (10) there is a fluid damping arrangement (42, 43, 24, 25) which offers greater reaction in the separating direction of relative movement than in the approaching direction of relative movement thereof.

FIG.1

Fluid Pressure Valve Assembly.

**0113179**

This invention relates to fluid pressure valve assemblies and relates especially to foot operable brake pressure control valves for air braking systems of vehicles.

It is commonplace to employ compressed air braking systems on heavy commercial and passenger carrying road vehicles, the brakes being controllable by a driver's foot operable valve. The driver's valve is usually designed to provide two separate but nonetheless usually equal output pressure for independent braking circuits of the vehicle. In some such vehicles relatively soft springing is utilised both in the front vehicle suspension itself and also in the driver's seat mountings and it is found that with certain combinations of such springing and braking force exerted by a driver's foot there is a tendency for oscillation to be set up in the foot valve whichmanifests itself in a vibration of the foot pedal and pulsed venting of the braking system by the foot valve with a resultant loss of air.

The object of the invention is to provide a foot valve which includes means operable to tend to reduce such oscillation.

According to the invention there is provided a fluid pressure valve assembly having an housing including an input force applying member a double valve arrangement operable by a fluid pressure responsive member which is

0113179

moveable in one direction in response to an input force exertable via resilient means to open a connection between an input port and an output port and moveable in the opposite direction in response to pressure at the output port in a sense to open a connection there between and a vent to thereby produce an output port pressure related in a predetermined manner to the input force and characterised by the combination of said force applying member and said pressure responsive member being provided with fluid damping means.

The fluid damping means may comprise a variable volume chamber acting between the pressure responsive member and an input force applying member.

The fluid damping means may comprise a variable volume formed between the pressure responsive member, the housing and the input force applying member the latter presenting a larger effected area than the former.

In order that the invention may be more clearly understood and readily carried into effect, the same will be further described by way of examples with reference to the accompanying drawings of which:

Fig. 1 illustrates a dual fluid pressure valve for use in a compressed air system of a vehicle and,

Fig. 2 illustrates an alternative construction for such a valve.

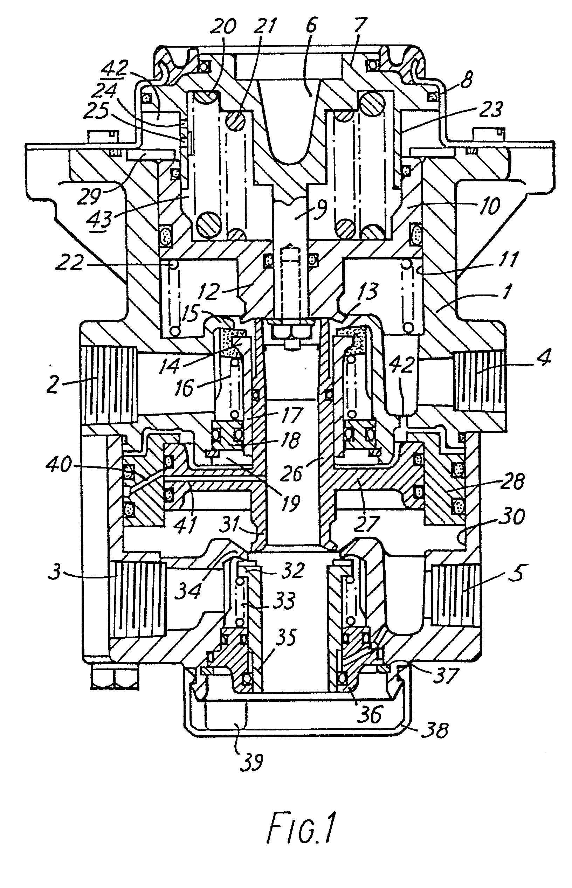

Referring to Fig. 1, the dual circuit valve has a main valve body 1 with first and second reservoir input ports 2 and 3, respective first and second output ports 4 and 5.

The valve is mountable on one side of a foot board of the vehicle which has an aperture through which a foot pedal operated push rod can project to engage with a socket 6 of an input force applying member 7. The force applying member 7 is retained slideably and sealingly in a top cover 8 and has a downwardly extending stem 9 which is slideable in a pressure responsive member 10 in the form of a piston which is moveable in a cylindrical bore 11. The piston itself has a coaxial downward projection 12 which carries an exhaust valve seat 13 of the first circuit. This exhaust valve seat 13 is engageable with a double valve member 14 which is spring loaded against an inlet valve seat 15 by a spring 16 the valve member having a generally cylindrical tubular portion 17 which is sealingly slideable in the housing being retained by a seal member 18 with an internal circlip 19.

Captive between the force exerting member 7 and the piston 10 there is provided resilient means in the form of two springs 20 and 21. A further light return spring 22 is retained between the housing and the underside of piston 10 as shown. The force applying member 7 is provided with a downwardly extending skirt 23 including two small chokes 24 and 25, the choke 25 being

- 4 -

0113179

provided with a one-way closure member whereby radially outward air flow is inhibited.

Referring briefly to the lower part of the assembly, which incorporates the parts for operating a second double valve, a central plunger 26 is sealingly slideable within the valve member 17 and is formed integrally with a piston 27 itself slideable within an outer larger diameter annular piston 28 which is slideable in a bore 30. The plunger 26 furthermore has a downward projection 31 which forms an exhaust valve seat for a double valve 32 which is urged by a spring 33 into engagement with an inlet valve seat 34 the lower member 32 being carried on a generally tubular member 35 which is sealingly retained in the housing via a sealing member 36 and an internal circlip 37. The lower end of the tubular member 35 opens into an atmospheric cap 38 which is provided with a vent port 39. Vent passages 40 and 41 are provided as shown through the pistons 27 and 28 to vent the space between the double seals thereof and a passage 42 is provided communicating between the output port 4 of the first valve and the region above the piston 27 for normal relay operation of the second valve.

In operation of the valve assembly of Fig. 1, the port 2 and the port 3 are connected to independent sources of pressure comprising two reservoirs charged from the same compressor through respective protection valves. Output ports 4 and 5 are connected to respective

0113179

service brake circuits on the vehicle and the member 7 is operable by a foot pedal as mentioned above. The valve is shown in the normal running condition with the piston 10 against its upper stop 29 the valve seat 13 lifted from the valve member 14 which in its turn is seated against the input valve seat 15. The output port 4 is therefore vented through the uncovered exhaust valve 13. Similarly, the piston 27 is in an upward position as shown in the second inlet valve 34 closed and the second exhaust valve opened whereby the output port 5 is also vented through the unseated exhaust valve. Upon depression of the force exerting member 7 by the driver's pedal a downward force is exerted on the pressure responsive member 10 via springs 20 and 21. The piston 10 is, therefore, moved downwards from its stop 29 against the action of spring 22 to seal off the exhaust seat 13. Further slight downward movement unseats the valve member 14 from the inlet valve seat 15 to provide communication between the input port 2 and the output port 4 the pressure increase at the latter port being communicated to the underside of piston 10. When the pressure builds up to a value which balances the downward force exerted by springs 20 and 21, the double valve assembly laps with both the seat 13 and the seat 15 in engagement with the closure member 14 and a steady output pressure is applied to the braking circuit connected to the port 4. This pressure is also applied via the port 42 above the piston 27 and piston 28 resulting in downward movement of these two pistons together, the pressure on the

0113179

underside being the pressure at the output port 5 then builds up as a result of similar action of the valve formed by 31, 34 and 32 until this valve also laps under the action of the pressure under piston 27. .

Referring now to the possibility of instability arising in the valve assembly, during the initial downward movement of the piston 7, air is displaced from the volume 42 through apertures 24 and 25 in a restricted manner into the larger volume 43. The restricted passages 24 and 25 therefore provide some restraining action as between the member 7 and the housing but the pressures in regions 42 and 43 quickly equalise. Upon a tendency for the pressure responsive member 10 to rise rapidly in the housing such as may be the tendency with an upward jerk of the driver's foot, such upward movement of 10 is restrained by the damping action effected by the chamber 42 and the greater restriction provided only by the passage 24 against flow from chamber 43 to chamber 42. A tendency for the assembly to oscillate is, therefore, appreciably reduced by the resultant damping of the combination of the combination of members 7 and 10.

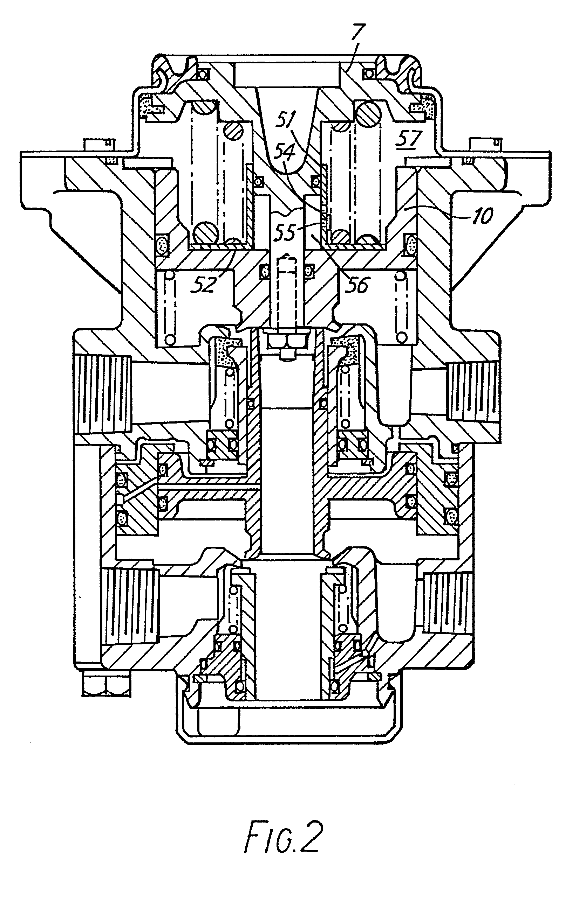

Referring to Fig. 2 the valve assembly shown therein is substantially the same in general construction as the assembly of Fig. 1 and will not be further des=cribed in detail but it will be seen that as an alternative to the provision of a downwardly extending skirt 23 on the force exerting member 7, an upwardly extending skirt 51 is arranged on the pressure

0113179

responsive member 10 to sealingly and slideably embrace the central trunk portion 52 of the member 7. The upwardly extending skirt 51 is carried on an angular plate 52 which is maintained in close contact with the upper surface of the piston 10 by virtue of the springs 20 and 21.

As in the case of the downwardly extending skirt 23 of Fig. 1, the upwardly extending skirt 51 of Fig. 2 is provided with two restrictions 54 and 55 by which here can flow from the chamber 56 to the larger volume outer chamber 67, the restriction 55 being a one-way passage whereby return flow can only occur via restriction 54. In operation of the arrangement of Fig. 2, the dual valve operates into substantially the same way as the dual valve of Fig. 1 but the sealed variable volume chamber 56 provides for a greater stiffness of the member 7 in relation to piston 10 on upward movement than on downward movement of the member 7 whereby the tendency for oscillation between the parts 7 and 10 is reduced.

The magnitudes of the restrictions 24, 25 or 54, 55 together with the associated damping volumes require selection in accordance with the characteristics, including the ways through the valves in the range of operating conditions, to provide the optimum reduction of the mentioned tendency for foot pedal oscillation.

- 1 -

0113179

CLAIMS

1.   A fluid pressure valve assembly having an housing
(1) including an input force applying member (7) a
double valve arrangement (13, 14,15) operable by a
fluid pressure responsive member (10) moveable in one
direction in response to an input force exertable via
resilient means (20, 21) to open a connection between
an input port (2 ) and an output port (4) and moveable
in the opposite direction in response to pressure at
the output port in a sense to open a connection there
between and a vent (39) to thereby produce an output
port pressure related in a predetermined manner to the
input force and characterised by the combination of
said force applying member (7) and the pressure
responsive member (10) being provided with fluid damping
means (42, 43, 24, 25;  54, 55, 56).

2.   A fluid pressure valve assembly as claimed in
claim 1, characterised in that the fluid damping means
comprises a variable volume (42, 56) formed between
the pressure responsive member (10) and the input force
applying member (7).

3.   A fluid pressure valve assembly as claimed in
claim 1, characterised in that the fluid damping means
comprises a variable volume (42) formed to act between
the force applying member (7) on the one hand and the
housing (29) and pressure responsive member (10) on the
other hand.

4.    A fluid pressure valve assembly as claimed in claim 2 or claim 3 characterised in that said variable volume is provided with fluid flow restriction means the restriction being greater for fluid flow into the volume than for fluid flow out of the volume.

5.    A fluid pressure valve assembly as claimed in Claims 2, 3 or 4 characterised by the fluid damping volume (42) being formed by the force applying member being provided with a skirt (23) sealingly slideable in relation to the pressure responsive member.

6.    A fluid pressure valve assembly as claimed in claims 2, 3, 4 characterised by the fluid damping volume (56) being formed by the pressure responsive member (10) being provided with a skirt 51 sealingly slideable in relation to the force applying member.

FIG.1

FIG.2

European Patent
Office

**EUROPEAN SEARCH REPORT**

**0113179**
Application number

EP 83 30 7088

## DOCUMENTS CONSIDERED TO BE RELEVANT

| Category | Citation of document with indication, where appropriate, of relevant passages | Relevant to claim | CLASSIFICATION OF THE APPLICATION (Int. Cl. ³) |
|---|---|---|---|
| A | GB-A-1 080 670 (WAGNER ELECTRIC)<br><br>----- | | B 60 T 15/04 |

**TECHNICAL FIELDS SEARCHED (Int. Cl. ³)**

B 60 T 15/00

The present search report has been drawn up for all claims

| Place of search | Date of completion of the search | Examiner |
|---|---|---|
| BERLIN | 16-02-1984 | LUDWIG H J |